# EUROPÄISCHE PATENTSCHRIFT

(11) **EP 4 505 859 B1**
(45) Veröffentlichungstag und Bekanntmachung des Hinweises auf die Patenterteilung: **25.03.2026**
(21) Anmeldenummer: 24182852.4
(22) Anmeldetag: 18.06.2024
(51) Int. Cl.: A01D 41/14, A01D 45/02, A01D 43/08

(54) **MAISPFLÜCKER UND DAMIT AUSGESTATTETE LANDMASCHINE**
CORN HEADER AND AGRICULTURAL MACHINE EQUIPPED WITH SAME
CUEILLEUR À MAÏS ET MACHINE AGRICOLE ÉQUIPÉE AVEC CELUI-CI

(30) Priorität: 06.08.2023 DE 102023120836
(43) Veröffentlichungstag der Anmeldung: 12.02.2025
(73) Patentinhaber: CLAAS Industrietechnik GmbH, 33106 Paderborn (DE)
(72) Erfinder: Hartmann, Felix, 34414 Warburg (DE); Schulte, Michael, 33129 Delbrück (DE)
(74) Vertreter: CLAAS Gruppe

(56) Entgegenhaltungen:
- EP-B1- 2 084 953
- EP-B2- 2 404 496
- DE-A1- 102012 014 087
- US-A1- 2007 197 327

## Beschreibung

Die vorliegende Erfindung betrifft einen Maispflücker, der, typischerweise als Erntevorsatz oder Teil eines Erntevorsatzes einer fahrbaren Landmaschine, dazu dient, Maisstängel bodennah abzuschneiden und die Kolben von ihnen abzutrennen. Ein solcher Maispflücker und eine damit ausgestattete Landmaschine sind aus EP 2 936 963 B1 und DE 10 2012 014 087 A1 bekannt.

Dieser herkömmliche Maispflücker umfasst mehrere Reiheneinheiten, die in Breitenrichtung des Maispflückers verteilt in einem Abstand angeordnet sind, der dem Reihenabstand eines auf einem Feld zu erntenden Maisbestandes entspricht, so dass, wenn die Landmaschine in Richtung der Reihen über das Feld fährt, jede Reiheneinheit nacheinander die Stängel einer Reihe erfasst und abschneidet. Jede Reiheneinheit umfasst eine Pflückeinheit mit zwei einen Pflückspalt bildenden Pflückwalzen. Indem die Pflückwalzen einen abgeschnittenen Stängel durch den Pflückspalt ziehen, werden die Kolben abgestreift; der von den Kolben befreite Stängel wird von einer unter der Pflückeinheit angeordneten Häckseleinheit zerkleinert, und das dabei erhaltene Häckselgut wird auf dem Feld verteilt.

An entgegengesetzten Enden einer Rückseite des Maispflückers sind ein erster Antriebsanschluss und ein zweiter Antriebsanschluss vorgesehen, die im Betrieb mit einem Motor einer Basiseinheit der Landmaschine trieblich verbunden sind. Einer der Antriebsanschlüsse treibt über eine gemeinsame, sich in Querrichtung des Maispflückers erstreckende Pflückerabtriebswelle die Pflückeinheiten an, der andere über eine entsprechende Häckselabtriebswelle die Häckseleinheiten.

Indem so Pflück- und Häckseleinheiten getrennt voneinander angetrieben werden, können zwar - sofern die Basiseinheit ein geeignetes Getriebe zwischen dem Motor und mit den Antriebsanschlüssen des Maispflückers gekoppelten Abtriebsanschlüssen aufweist - unterschiedliche Drehzahlverhältnisse zwischen Pflück- und Häckseleinheiten eingestellt werden, doch ist dies mit beträchtlichem Kostenaufwand, Gewicht und Platzbedarf verbunden, da auf Seiten des Maispflückers zwei getrennte Antriebsstränge implementiert werden müssen; außerdem erschweren die zwei voneinander beabstandeten Abtriebsanschlüsse das Ankoppeln des Maispflückers an die Basiseinheit und die Verwendung von Maispflückern unterschiedlicher Breite an einer gleichen Basiseinheit.

Eine Aufgabe der Erfindung ist, einen Maispflücker bereitzustellen, der den gleichzeitigen Betrieb von Pflück- und Häckseleinheiten bei geringem Aufwand an Kosten, Gewicht und Bauraum ermöglicht.

Die Aufgabe wird einem Aspekt der Erfindung zufolge gelöst, indem bei einem Maispflücker mit wenigstens einer Reiheneinheit, wobei die Reiheneinheit eine Pflückeinheit, in der zwei Pflückwalzen einen Pflückspalt begrenzen, und eine Häckseleinheit umfasst, die unter der Pflückeinheit angeordnet ist, um einen durch den Pflückspalt hindurchgezogenen Halm zu häckseln, und einer Getriebeeinheit, die eine erste Hauptwelle zum Antreiben der wenigstens einen Pflückeinheit und eine zweite Hauptwelle zum Antreiben der wenigstens einen Häckseleinheit umfasst, die Getriebeeinheit in einer Seitenwand des Maispflückers angeordnet ist und eine mit der ersten und der zweiten Hauptwelle trieblich verbundene Antriebswelle umfasst, die mit der ersten und der zweiten Hauptwelle in einer gemeinsamen vertikalen Ebene verläuft. Da nur eine gemeinsame Antriebswelle für Pflück- und Häckseleinheiten benötigt wird, ist das Herstellen einer kraftübertragenden Verbindung zur Basiseinheit und damit die Anbringung des Maispflückers an der Basiseinheit erleichtert; die Anordnung der Wellen in einer gemeinsamen vertikalen Ebene ermöglicht eine platzsparende Unterbringung des Getriebes in einer Seitenwand des Maispflückers.

Um unterschiedliche Drehzahlverhältnisse zwischen Pflück- und Häckseleinheiten zu ermöglichen, kann zwischen der Antriebswelle und einer der Hauptwellen, vorzugsweise der ersten Hauptwelle, ein Stufengetriebe vorgesehen sein.

Um die unterschiedlichen Schaltstufen in einem kompakten Bauraum zu realisieren, kann das Stufengetriebe mehrere Räderpaare mit miteinander kämmenden Rädern umfassen. Um den Drehmomentfluss über eines der Räderpaare selektiv zu erlauben bzw. zu unterbinden, kann von den Rädern jedes Räderpaars jeweils wenigstens eines zwischen einem mit der es tragenden Welle drehfest gekoppelten Zustand und einem gegen die Welle drehbaren Zustand umschaltbar sein.

Wenn das Stufengetriebe eine Vorgelegewelle umfasst, können die Räderpaare jeweils ein erstes von der Vorgelegewelle getragenes Rad aufweisen, während zweite Räder der Räderpaare auf die Antriebswelle und die eine Hauptwelle verteilt sind. Die Drehmomentübertragung kann dann in zwei Schritten, von der Antriebswelle zur Vorgelegewelle und von dieser zur Hauptwelle erfolgen. Die Zweistufigkeit ermöglicht stark variierende Übersetzungsverhältnisse bei geringen Durchmesserunterschieden zwischen den Rädern jedes Paars, was wiederum eine kompakte Bauform des Getriebes ermöglicht. Vorzugsweise sind je zwei Räderpaare mit auf die Antriebswelle und die Vorgelegewelle bzw. auf die Vorgelegewelle und die eine Hauptwelle verteilten Rädern vorgesehen, so dass das Stufengetriebe ein Vierganggetriebe bildet.

Für eine kompakte Bauform des Getriebes und insbesondere seine platzsparende Unterbringung in einer Seitenwand des Maispflückers ist es ferner nützlich, dass die Vorgelegewelle in der Ebene der Antriebs- und Hauptwellen verläuft.

Ein Übersetzungsverhältnis des Stufengetriebes sollte elektrisch und/oder hydraulisch fernsteuerbar sein, um eine Festlegung des Übersetzungsverhältnisses von einer Fahrerkanzel einer mit dem Maispflücker ausgestatteten Landmaschine aus, vorzugsweise bei fahrender Maschine im laufenden Erntebetrieb, zu ermöglichen.

Zu diesem Zweck kann eine Kupplung an einer Welle zwischen zwei Rädern verschiedener Räderpaare angeordnet und zwischen zwei Stellungen verstellbar sein, in denen sie jeweils eines der benachbarten Räder drehfest an die Welle kuppelt. Vorzugsweise ist diese Welle die Vorgelegewelle. Die Nutzbarkeit einer gleichen Kupplung für zwei Radpaare trägt ebenfalls zur Kompaktheit des Getriebes und zu günstigen Fertigungskosten bei.

Um den Betrieb einer der Einheiten, typischerweise der Häckseleinheit, bei Nichtbedarf unterbinden zu können, kann deren Hauptwelle von der Antriebswelle abkoppelbar sein. Wenn mehrere Reiheneinheiten über das Stufengetriebe angetrieben sind, brauchen deren Häckseleinheiten nicht einzeln geschaltet zu werden, sondern können durch Abkoppeln ihrer gemeinsamen Hauptwelle alle auf einen Schlag deaktiviert werden.

Wenn wenigstens eine der Hauptwellen, optional die zweite Hauptwelle, mit der Antriebswelle über eine Zwischenwelle gekoppelt ist, kann eine solche Abkopplung durch ein Schwenken der Zwischenwelle erfolgen, bei der ein Rad der Zwischenwelle von der einen Hauptwelle abgerückt und dadurch die Kraftübertragung zwischen der Zwischenwelle und der einen Hauptwelle unterbrochen wird. Indem die Schwenkbewegung auf einer zur anderen Hauptwelle koaxiale Bahn erfolgt, kann der Kraftschluss zwischen der anderen Hauptwelle und der Zwischenwelle bestehen bleiben.

Wenn in einem Räderpaar, das die Zwischenwelle an die andere Hauptwelle koppelt, wenigstens ein Rad austauschbar ist, kann durch einen solchen Austausch das Übersetzungsverhältnis zwischen der Antriebswelle und der Hauptwelle modifiziert werden. Insbesondere wenn die Zwischenwelle wie oben erwähnt schwenkbar ist, genügt es zum Verändern des Übersetzungsverhältnisses, ein einziges Rad auszutauschen.

Die erste Hauptwelle kann mit mehreren der Pflückeinheiten, typischerweise allen oder einer Hälfte der Pflückeinheiten, über eine in Breitenrichtung des Maispflückers verlaufende Pflückerabtriebswelle gekoppelt sein. In gleicher Weise kann die zweite Hauptwelle mit mehreren der Häckseleinheiten über eine in Breitenrichtung des Maispflückers verlaufende Häckselabtriebswelle gekoppelt sein.

Um einen Maispflücker großer Breite anzutreiben, kann es zweckmäßig sein, dass eine zweite Getriebeeinheit in einer zweiten Seitenwand des Maispflückers vorgesehen ist und jeder Getriebeeinheit je eine Pflückerabtriebswelle und eine Häckselabtriebswelle zugeordnet ist. Die Abtriebswellen der beiden Getriebeeinheiten können physisch voneinander getrennt sein; denkbar ist aber auch, dass jede Getriebeeinheit an einem von zwei entgegengesetzten Enden einer zusammenhängenden Abtriebswelle angreift.

Gegenstand der Erfindung ist ferner eine Landmaschine mit einer fahrbaren Basiseinheit und einem Maispflücker wie oben beschrieben, bei der die Antriebswelle der wenigstens einen Getriebeeinheit an einen Abtriebsanschluss, z.B. eine Zapfwelle, der Basiseinheit gekoppelt ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines erfindungsgemäßen Maispflückers, montiert an einem Mähdrescher;
- Fig. 2: den Maispflücker in einer perspektivischen Ansicht schräg von hinten;
- Fig. 3: ein Getriebe des Maispflückers;
- Fig. 4: eine schematische Draufsicht auf ein erstes Modell des Maispflückers; und
- Fig. 5: eine schematische Draufsicht auf ein zweites Modell des Maispflückers.

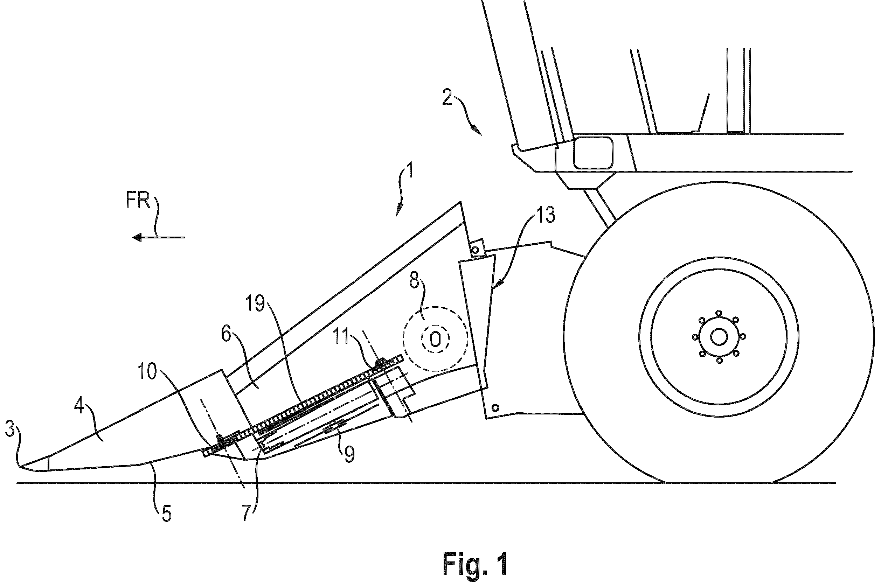

Fig. 1 zeigt schematisch eine Landmaschine, hier einen Mähdrescher, mit einer fahrbaren Basiseinheit 2 und einem vorn an der nur zum Teil gezeigten Basiseinheit 2 montierten Maispflücker 1. Entlang einer Vorderkante des Maispflückers 1 ist eine Reihe von sich jeweils von einer vorderen Spitze 3 aus nach hinten ähnlich einem halben Kegel verbreiternden Führungshauben 4 angeordnet. Seitliche Flanken 5 von benachbarten Führungshauben 4 begrenzen jeweils einen sich nach hinten verengenden Gutannahmebereich, in den, wenn der Mähdrescher in einer Fahrtrichtung FR entlang von Reihen eines Maisbestands auf einem Feld fährt, um den Mais zu ernten, die Maisstängel einer nach dem anderen einrücken, um bei Erreichen des hinteren Endes des Gutannahmebereich geschnitten und von zwischen Umlenkrollen 10, 11 umlaufenden endlosen Förderketten 19 in einen Pflückspalt zwischen zwei Pflückwalzen 7 hineingeschoben zu werden.

Die Pflückwalzen 7 sind gegenläufig drehangetrieben, um die Stängel durch den Pflückspalt hindurch nach unten zu ziehen und dabei daranhängende Kolben an den Kanten von Pflückplatten abzustreifen, die sich beiderseits des Pflückspalts zwischen den Förderketten 19 darüber und den Pflückwalzen 7 darunter erstrecken. Die zwei Pflückplatten und Pflückwalzen, die jeweils einen Pflückspalt begrenzen, bilden eine Pflückeinheit.

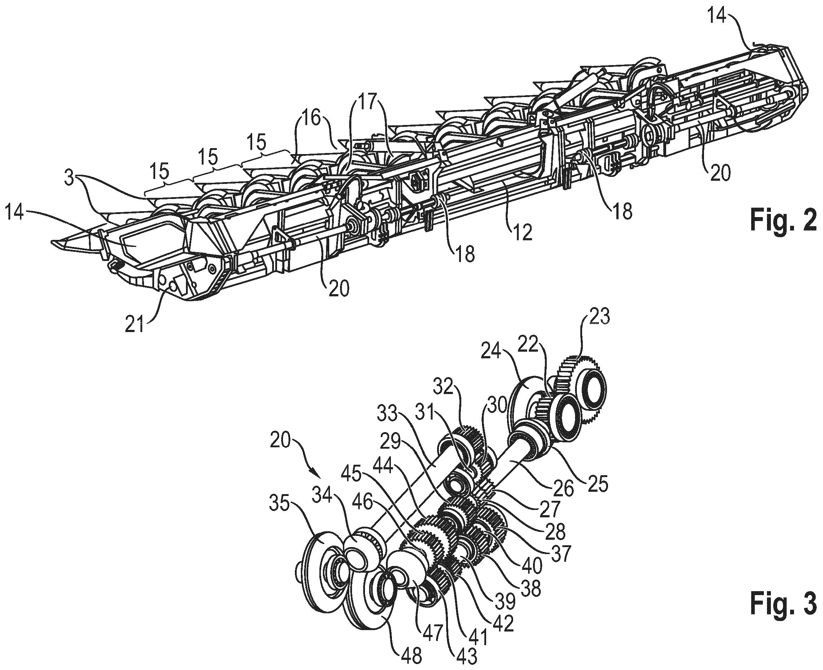

Zum Pflückspalt hin abschüssige Wandplatten 6 halten die abgestreiften Kolben in der Reichweite der Förderketten 19, so dass die abgestreiften Kolben von den Förderketten 19 weiter nach hinten bis in den Erfassungsbereich einer sich quer zur Fahrtrichtung FR erstreckenden Förderschnecke 8 geschoben werden. Die Förderschnecke 8 ist drehangetrieben, um die Kolben bis vor einen Auslass 12 (s. Fig. 2) in der Mitte einer Rückwand 13 des Maispflückers 1 zu schieben, von wo sie zu einem Dreschwerk im Innern der Basiseinheit 2 weitergefördert werden.

Während die Stängel den Pflückspalt nach unten durchlaufen, werden sie von einer unter den Pflückwalzen 7 angeordneten Häckseleinheit 9 mit rotierenden Messern zerkleinert, und das erhaltene Häckselgut wird auf dem Feld verstreut.

Fig. 2 zeigt den Maispflücker 1 in einer Ansicht schräg von hinten. Man erkennt den Auslass 12 in der Mitte der Rückwand 13, die Reihe der Spitzen 3 entlang einer Vorderkante des Maispflückers 1 sowie von den Enden der Rückwand 13 aus in der Fahrtrichtung nach vorn verlaufende Seitenwände 14. Zwischen zwei Spitzen 3 liegt jeweils eine Reiheneinheit 15 mit je einem sich nach hinten verengenden Erfassungsbereich 16, der daran anschließenden Pflückeinheit 17 und der unter dem Maispflücker 1 verborgenen Häckseleinheit 9.

Beiderseits des Auslasses 12 sind an der Rückwand 13 Antriebsanschlüsse 18 angeordnet, die, wenn der Maispflücker 1 an der Basiseinheit 2 montiert ist, über jeweils einen Abtriebsanschluss auf Seiten der Basiseinheit 1 mit einem Motor der Basiseinheit trieblich verbunden sind. Jeder Antriebsanschluss 18 ist über eine der quer zur Fahrtrichtung FR ausgerichteten Wellen 20 mit einer Getriebeeinheit 21 in einer der Seitenwände 14 verbunden. Die Breite des Maispflückers 1 - und damit auch die Länge der Wellen 20 - kann von einem Modell zum anderen variieren; indem Abmessungen des Auslasses 12 und die Platzierung der Antriebsanschlüsse 18 für alle Modelle einheitlich sind, ist sichergestellt, dass unterschiedlich breite Modelle des Maispflückers 1 an einer gleichen Basiseinheit 2 verwendet werden können.

Fig. 3 zeigt eine der in den Seitenwänden 14 verborgenen Getriebeeinheiten 21 in einer perspektivischen Ansicht schräg von vorn. Die Welle 20 trägt an ihrem äußeren Ende ein Rad 23, das über ein mit ihm kämmendes Rad 22 und ein mit letzterem drehfest verbundenes Kegelrad 24 ein Kegelrad 25 an einer Antriebswelle 26 der Getriebeeinheit 21 antreibt.

Weitere Räder 27, 28, 29 sind drehfest an der Antriebswelle 26 montiert. Das Rad 27 kämmt mit einem Rad 30 an einer Zwischenwelle 31. Ein angetriebenes Rad 32 an einer Hauptwelle 33 kann unmittelbar mit dem Rad 30 kämmen. Einer zweckmäßigen Variante zufolge ist das Rad 32 austauschbar, und die Zwischenwelle 31 ist auf einer kreisbogenförmigen Bahn, deren Mittelpunkt auf der Achse der Antriebswelle 26 liegt, an verschiedenen Stellen arretierbar, so dass das Rad 30 mit einem als Ersatz für das Rad 32 an der Hauptwelle 33 montierten Rad von anderem Durchmesser in Eingriff gebracht werden kann. So sind unterschiedliche Übersetzungsverhältnisse zwischen der Antriebswelle 25 und der Hauptwelle 33 realisierbar. Die Zwischenwelle 31 kann auf der kreisbogenförmigen Bahn auch in eine Stellung gebracht werden, in der die Räder 30, 32 außer Eingriff sind, um die Drehmomentübertragung zur Hauptwelle 33 zu unterbrechen.

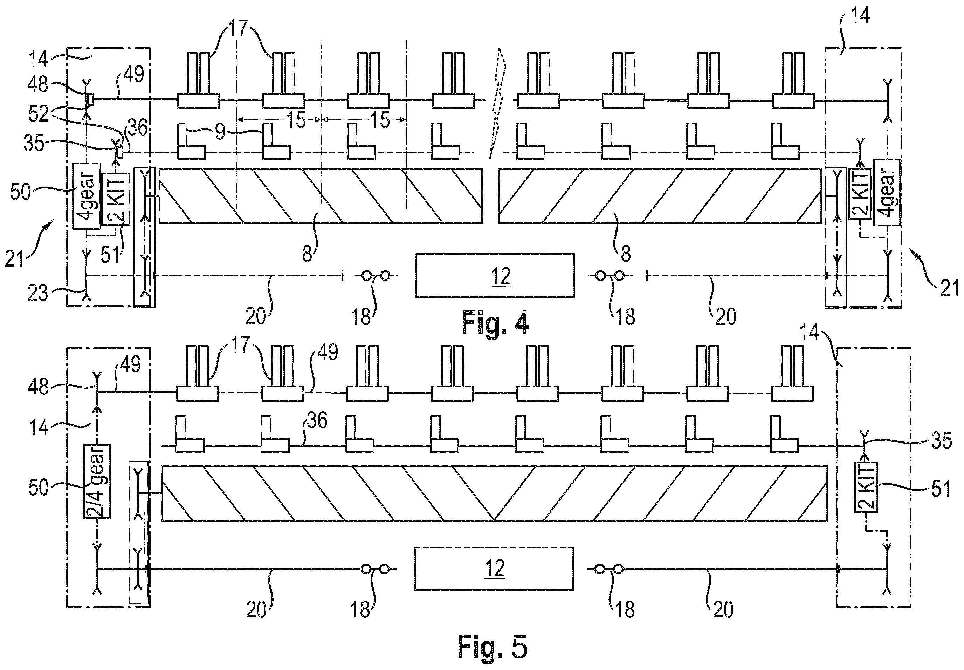

Die Hauptwelle 33 treibt Häckseleinheiten 9 über ein Paar Kegelräder 34, 35 und eine in Breitenrichtung des Maispflückers 1 verlaufende Häckselabtriebswelle 36 (s. Fig. 4).

Die Räder 28, 29 haben unterschiedliche Durchmesser und kämmen jeweils mit einem komplementären Rad 37 bzw. 38 an einer Vorgelegewelle 39. Über eine zwischen den Rädern 37, 38 angeordnete Synchronisiereinrichtung 40 ist jeweils eines der Räder 37, 38 drehfest mit der Vorgelegewelle 39 koppelbar, so dass zwei unterschiedliche Übersetzungsverhältnisse zwischen der Antriebswelle 26 und der Vorgelegewelle 39 realisierbar sind.

Die Vorgelegewelle 39 trägt zwei weitere durch eine zwischen ihnen angeordnete Kupplung 40, 41 oder Synchronisiereinrichtung selektiv drehfest ankoppelbare Räder 42, 43. Letztere kämmen mit Rädern 44, 45 an einer Hauptwelle 46, die über Kegelräder 47, 48 und eine Pflückerabtriebswelle 49 (s. Fig. 4) Pflückeinheiten 17 antreibt. Den vier verschiedenen Kombinationen von Stellungen der Kupplungen 40, 41 bzw. Synchronisiereinrichtungen entsprechen vier verschiedene Übersetzungsverhältnisse zwischen der Antriebswelle 26 und der Hauptwelle 46.

Die Kupplungen 40, 41 sind entlang der Vorgelegewelle 39 mit Hilfe von an sich bekannten, in den Figuren nicht dargestellten Stellgliedern verstellbar. Diese können von einer Fahrerkabine der Basiseinheit 2 aus elektrisch und/oder hydraulisch steuerbar sein. So kann ein Fahrer das Übersetzungsverhältnis im laufenden Betrieb, während der Fahrt, ändern. Alternativ oder ergänzend kann eine Möglichkeit vorgesehen sein, die Stellglieder mittels am Maispflücker 1 selber angebrachter Bedienelemente zu betätigen.

Die Hauptwelle 46 erstreckt sich in axialer Verlängerung der Antriebswelle 26. Die Wellen 26, 33, 39 und 46 liegen in einer gleichen vertikalen, zur Fahrtrichtung FR parallelen Ebene. Der Abstand der Zwischenwelle 31 von dieser Ebene kann je nach Durchmesser des Rades 32 variieren, ist aber klein sein im Verhältnis zum Abstand der Wellen 26, 33, 39 und 46 in vertikaler Richtung und trägt daher zum Platzbedarf der Getriebeeinheit 21 nicht nennenswert bei.

Fig. 4 zeigt ein Modell des Maispflückers 1 in einer schematischen Draufsicht. Gezeigt sind der Auslass 12 mit den beiderseits davon angeordneten Antriebsanschlüssen 18 und den sich von dort zu den Getriebeeinheiten 21 in beiden Seitenwänden des Maispflückers 1 erstreckenden Wellen 20. Jede Getriebeeinheit 21 treibt die Förderschnecke 8 von einem ihrer seitlichen Enden aus über das Rad 23, die Pflückerabtriebswelle 49 über eine Untereinheit 50 der Getriebeeinheit 21, die die Vorgelegewelle 39 und die Hauptwelle 46 umfasst, und die Häckselabtriebswelle 36 über eine Untereinheit 51, die die Zwischenwelle 31 und die Hauptwelle 33 umfasst.

Zum Toleranzausgleich zwischen den Getriebeeinheiten 21 und den Abtriebswellen 36, 39 kann jeweils eine Ausgleichskupplung 52 wie etwa eine Bogenzahnkupplung zwischen dem Kegelrad 35 oder 48 und der darüber angetriebenen Abtriebswelle 36 bzw. 49 vorgesehen sein.

Die Förderschnecke 8, die Pflückerabtriebswelle 49 und die Häckselabtriebswelle 36 können sich über die gesamte Breite des Maispflückers 1 erstrecken oder, wie für die Förderschnecke 8 angedeutet, mittig unterteilt sein; indem sie von zwei Seiten her angetrieben werden, ist eine große Breite des Maispflückers 1 von z.B. 16 oder 18 Reiheneinheiten 15 realisierbar.

Die Aufteilung der Getriebeeinheit 21 in Untereinheiten 50, 51 hat ferner den Vorteil, dass in einem Maispflücker für einen Kunden, der keine Häckselfunktion benötigt, zusammen mit den Häckseleinheiten 9 auch die Untereinheit 51 einfach weggelassen und ein solcher Maispflücker kostengünstig bereitgestellt werden kann.

Bei einem Maispflückermodell von geringerer Breite kann eine einzelne Getriebeinheit 21 in nur einer Seitenwand ausreichen, um sämtliche Reiheneinheiten 15 anzutreiben. Denkbar ist auch, an jeder Seitenwand 14 jeweils eine der beiden Untereinheiten 50, 51 wegzulassen, so dass, wie in Fig. 5 gezeigt, die Pflückeinheiten 17 jeweils von einer Seite aus und die Häckseleinheiten 9 von der anderen Seite aus angetrieben werden. So wird eine ausgeglichenere Gewichtsverteilung erreicht, was die Höhenregelung des Maispflückers 1 erleichtert und somit letztlich eine höhere Arbeitsgeschwindigkeit erlaubt .Da keine anderen Komponenten benötigt werden als für den Maispflücker 1 der Fig. 4, ist auch diese Variante kostengünstig realisierbar.

### Bezugszeichen

- 1: Maispflücker
- 2: Basiseinheit
- 3: Spitze
- 4: Führungshaube
- 5: Flanke
- 6: Wandplatte
- 7: Pflückwalze
- 8: Förderschnecke
- 9: Häckseleinheit
- 10: Umlenkrolle
- 11: Umlenkrolle
- 12: Auslass
- 13: Rückwand
- 14: Seitenwand
- 15: Reiheneinheit
- 16: Erfassungsbereich
- 17: Pflückeinheit
- 18: Antriebsanschluss
- 19: Förderkette
- 20: Welle
- 21: Getriebeeinheit
- 22: Rad
- 23: Rad
- 24: Kegelrad
- 25: Kegelrad
- 26: Antriebswelle
- 27: Rad
- 28: Rad
- 29: Rad
- 30: Rad
- 31: Zwischenwelle
- 32: Rad
- 33: Hauptwelle
- 34: Kegelrad
- 35: Kegelrad
- 36: Häckselabtriebswelle
- 37: Rad
- 38: Rad
- 39: Vorgelegewelle
- 40: Kupplung
- 41: Kupplung
- 42: Rad
- 43: Rad
- 44: Rad
- 45: Rad
- 46: Hauptwelle
- 47: Kegelrad
- 48: Kegelrad
- 49: Pflückerabtriebswelle
- 50: Untereinheit
- 51: Untereinheit
- 52: Ausgleichskupplung

## Patentansprüche

1. Maispflücker (1) mit wenigstens einer Reiheneinheit (15), wobei die Reiheneinheit (15) eine Pflückeinheit (17), in der zwei Pflückwalzen (7) einen Pflückspalt begrenzen, und eine Häckseleinheit (9) umfasst, die unter der Pflückeinheit (17) angeordnet ist, um einen durch den Pflückspalt hindurchgezogenen Halm zu häckseln, und einer Getriebeeinheit (21), die eine erste Hauptwelle (46) zum Antreiben der wenigstens einen Pflückeinheit (17) und eine zweite Hauptwelle (33) zum Antreiben der wenigstens einen Häckseleinheit (9) umfasst,
**dadurch gekennzeichnet, dass** die Getriebeeinheit (21) in einer Seitenwand (14) des Maispflückers (1) angeordnet ist und eine mit der ersten und der zweiten Hauptwelle (46, 33) trieblich verbundene Antriebswelle (26) umfasst, die mit der ersten und der zweiten Hauptwelle (46, 33) in einer gemeinsamen vertikalen Ebene verläuft.

2. Maispflücker nach Anspruch 1, **dadurch gekennzeichnet, dass** wenigstens eine der Hauptwellen (46, 33) , optional die erste Hauptwelle (46) mit der Antriebswelle (26) über ein Stufengetriebe verbunden ist.

3. Maispflücker nach Anspruch 2, **dadurch gekennzeichnet, dass** das Stufengetriebe mehrere Räderpaare mit miteinander kämmenden Rädern (28, 37; 29, 38; 42, 44; 43, 45) umfasst, wobei von den Rädern (28, 37; 29, 38; 42, 44; 43, 45) jedes Räderpaars jeweils wenigstens eines (37, 38, 42, 43) zwischen einem mit der es tragenden Welle (39) drehfest gekoppelten Zustand und einem gegen die Welle (39) drehbaren Zustand umschaltbar ist.

4. Maispflücker nach Anspruch 3, **dadurch gekennzeichnet, dass** das Stufengetriebe eine Vorgelegewelle (39) umfasst und dass die Räderpaare jeweils ein erstes von der Vorgelegewelle (39 getragenes Rad (37, 38, 42, 43) aufweisen und zweite Räder (28, 29, 44, 45) der Räderpaare auf die Antriebswelle (26) und die eine Hauptwelle (46) verteilt sind.

5. Maispflücker nach Anspruch 3, **dadurch gekennzeichnet, dass** die Vorgelegewelle (39) in der Ebene der Antriebs- und Hauptwellen (26, 46, 43) verläuft.

6. Maispflücker nach einem der Ansprüche 2 bis 5, **dadurch gekennzeichnet, dass** ein Übersetzungsverhältnis des Stufengetriebes elektrisch und/oder hydraulisch fernsteuerbar ist.

7. Maispflücker nach einem der Ansprüche 3 bis 5, **dadurch gekennzeichnet, dass** eine Kupplung (40, 41) an einer Welle (39) zwischen zwei Rädern (37, 38; 42, 43) verschiedener Räderpaare angeordnet und zwischen zwei Stellungen verstellbar ist, in denen sie jeweils eines der benachbarten Räder (37, 38; 42, 43) drehfest an die Welle (39) kuppelt.

8. Maispflücker nach einem der vorhergehenden Ansprüche, **dadurch gekennzeichnet, dass** wenigstens eine andere der Hauptwellen, optional die zweite Hauptwelle, (33) von der Antriebswelle (26) abkoppelbar ist.

9. Maispflücker nach einem der vorhergehenden Ansprüche, **dadurch gekennzeichnet, dass** wenigstens eine andere der Hauptwellen, optional die zweite Hauptwelle, (33) mit der Antriebswelle (26) über eine Zwischenwelle (31) gekoppelt ist, wobei in einem Räderpaar (30, 32), das die Zwischenwelle (31) an die andere Hauptwelle (33) koppelt, wenigstens ein Rad (32) austauschbar ist.

10. Maispflücker nach einem der vorhergehenden Ansprüche, **dadurch gekennzeichnet, dass** die erste Hauptwelle (46) mit mehreren der Pflückeinheiten (17) über eine in Breitenrichtung des Maispflückers (1) verlaufende Pflückerabtriebswelle (49) gekoppelt ist und/oder die zweite Hauptwelle (33) mit mehreren der Häckseleinheiten (9) über eine in Breitenrichtung des Maispflückers (1) verlaufende Häckselabtriebswelle (36) gekoppelt ist.

11. Maispflücker nach Anspruch 10, **dadurch gekennzeichnet, dass** eine zweite Getriebeeinheit (21) in einer zweiten Seitenwand (14) des Maispflückers (1) vorgesehen ist und jeder Getriebeeinheit (21) je eine Pflückerabtriebswelle (49) und eine Häckselabtriebswelle (36) zugeordnet ist.

12. Landmaschine mit einer fahrbaren Basiseinheit (2) und einem Maispflücker (1) nach einem der vorhergehenden Ansprüche, bei der die Antriebswelle (26) der wenigstens einen Getriebeeinheit (21) an einen Abtriebsanschluss der Basiseinheit (2) gekoppelt ist.

## Claims

1. Corn header (1) having at least one row unit (15), wherein the row unit (15) comprises a picking unit (17), in which two picking rollers (7) delimit a picking gap, and a chopping unit (9) which is disposed below the picking unit (17) in order to chop a stalk pulled through the picking gap, and a gear unit (21) comprising a first main shaft (46) for driving the at least one picking unit (17) and a second main shaft (33) for driving the at least one chopping unit (9),
**characterized in that** the gear unit (21) is disposed in a lateral wall (14) of the corn header (1) and comprises a drive shaft (26) which is operatively connected to the first and the second main shaft (46, 33) and runs conjointly with the first and the second main shaft (46, 33) in a common vertical plane.

2. Corn header according to Claim 1, **characterized in that** at least one of the main shafts (46, 33), optionally the first main shaft (46), is connected to the drive shaft (26) via a multi-step transmission.

3. Corn header according to Claim 2, **characterized in that** the multi-step transmission comprises a plurality of gear pairs with meshing gears (28, 37; 29, 38; 42, 44; 43, 45), wherein of the gears (28, 37; 29, 38; 42, 44; 43, 45) of each gear pair at least one (37, 38, 42, 43) is switchable between a state in which the gear is co-rotationally coupled to its supporting shaft (39) and a state in which it is rotatable relative to the shaft (39).

4. Corn header according to Claim 3, **characterized in that** the multi-step transmission comprises a layshaft (39), and **in that** the gear pairs each have a first gear (37, 38, 42, 43) supported by the layshaft (39) and the second gears (28, 29, 44, 45) of the gear pairs are distributed among the drive shaft (26) and the one main shaft (46).

5. Corn header according to Claim 3, **characterized in that** the layshaft (39) runs in the plane of the drive and main shafts (26, 46, 43).

6. Corn header according to one of Claims 2 to 5, **characterized in that** a gear ratio of the multi-step transmission is able to be electrically and/or hydraulically remote-controlled.

7. Corn header according to one of Claims 3 to 5, **characterized in that** a coupling (40, 41) is disposed on a shaft (39) between two gears (37, 38; 42, 43) of different gear pairs and is adjustable between two positions in which said coupling couples in each case one of the adjacent gears (37, 38; 42, 43) co-rotationally to the shaft (39).

8. Corn header according to any one of the preceding claims, **characterized in that** at least one other of the main shafts, optionally the second main shaft (33), is able to be decoupled from the drive shaft (26).

9. Corn header according to one of the preceding claims, **characterized in that** at least one other of the main shafts, optionally the second main shaft (33), is coupled to the drive shaft (26) via an intermediate shaft (31), wherein in a gear pair (30, 32) at least one gear (32), which couples the intermediate shaft (31) to the other main shaft (33), is interchangeable.

10. Corn header according to one of the preceding claims, **characterized in that** the first main shaft (46) is coupled to a plurality of picking units (17) via a header output shaft (49) running in the width direction of the corn header (1) and/or the second main shaft (33) is coupled to a plurality of the chopping units (9) via a chopping output shaft (36) running in the width direction of the corn header (1).

11. Corn header according to Claim 10, **characterized in that** a second gear unit (21) is provided in a second lateral wall (14) of the corn header (1) and each gear unit (21) is assigned in each case one header output shaft (49) and one chopping output shaft (36).

12. Agricultural machine having a mobile base unit (2) and a corn header (1) according to one of the preceding claims, wherein the drive shaft (26) of the at least one gear unit (21) is coupled to an output connector of the base unit (2).

## Revendications

1. Cueilleur de maïs (1) avec au moins une unité de rang (15), où l'unité de rang (15) comprend une unité de cueillette (17) dans laquelle deux rouleaux de cueillette (7) délimitent un interstice de cueillette, et une unité de hachage (9) agencée sous l'unité de cueillette (17) afin de hacher une tige tirée à travers l'interstice de cueillette, et une unité de transmission (21) qui comprend un premier arbre principal (46) pour entraîner l'au moins une unité de cueillette (17) et un deuxième arbre principal (33) pour entraîner l'au moins une unité de hachage (9),
**caractérisé en ce que** l'unité de transmission (21) est agencée dans une paroi latérale (14) du cueilleur de maïs (1) et comprend un arbre d'entraînement (26) relié de manière entraînante aux premier et deuxième arbres principaux (46, 33), qui s'étend avec les premier et deuxième arbres principaux (46, 33) dans un plan vertical commun.

2. Cueilleur de maïs selon la revendication 1, **caractérisé en ce qu'**au moins l'un des arbres principaux (46, 33), éventuellement le premier arbre principal (46), est relié à l'arbre d'entraînement (26) par l'intermédiaire d'un mécanisme à étages.

3. Cueilleur de maïs selon la revendication 2, **caractérisée en ce que** le mécanisme à étages comprend plusieurs paires de roues avec des roues engrenant entre elles (28, 37 ; 29, 38 ; 42, 44 ; 43, 45), où parmi les roues (28, 37 ; 29, 38 ; 42, 44 ; 43, 45) de chaque paire de roues, au moins une (37, 38, 42, 43) peut être commutée entre un état couplé de manière solidaire en rotation à l'arbre (39) qui la porte et un état pouvant tourner par rapport à l'arbre (39).

4. Cueilleur de maïs selon la revendication 3, **caractérisé en ce que** le mécanisme à étages comprend un arbre de renvoi (39) et **en ce que** les paires de roues présentent chacune une première roue (37, 38, 42, 43) portée par l'arbre de renvoi (39) et des deuxièmes roues (28, 29, 44, 45) des paires de roues sont réparties sur l'arbre d'entraînement (26) et l'arbre principal (46).

5. Cueilleur de maïs selon la revendication 3, **caractérisé en ce que** l'arbre de renvoi (39) s'étend dans le plan des arbres d'entraînement et principal (26, 46, 43).

6. Cueilleur de maïs selon l'une quelconque des revendications 2 à 5, **caractérisé en ce qu'**un rapport de transmission du mécanisme à étages peut être commandé à distance électriquement et/ou hydrauliquement.

7. Cueilleur de maïs selon l'une quelconque des revendications 3 à 5, **caractérisé en ce qu'**un accouplement (40, 41) est agencé sur un arbre (39) entre deux roues (37, 38 ; 42, 43) de paires de roues différentes et est réglable entre deux positions dans lesquelles il accouple respectivement l'une des roues voisines (37, 38 ; 42, 43) de manière solidaire en rotation à l'arbre (39).

8. Cueilleur de maïs selon l'une quelconque des revendications précédentes, **caractérisé en ce qu'**au moins un autre des arbres principaux, éventuellement le deuxième arbre principal (33), peut être désaccouplé de l'arbre d'entraînement (26).

9. Cueilleur de maïs selon l'une quelconque des revendications précédentes, **caractérisé en ce qu'**au moins un autre des arbres principaux, éventuellement le deuxième arbre principal, (33) est accouplé à l'arbre d'entraînement (26) par l'intermédiaire d'un arbre intermédiaire (31), au moins une roue (32) d'une paire de roues (30, 32) qui accouple l'arbre intermédiaire (31) à l'autre arbre principal (33) étant interchangeable.

10. Cueilleur de maïs selon l'une quelconque des revendications précédentes, **caractérisé en ce que** le premier arbre principal (46) est accouplé à plusieurs des unités de cueillette (17) par l'intermédiaire d'un arbre de sortie de cueilleur (49) s'étendant dans la direction de la largeur du cueilleur de maïs (1) et/ou le deuxième arbre principal (33) est accouplé à plusieurs des unités de hachage (9) par l'intermédiaire d'un arbre de sortie de hachage (36) s'étendant dans la direction de la largeur du cueilleur de maïs (1).

11. Cueilleur de maïs selon la revendication 10, **caractérisé en ce qu'**une deuxième unité de transmission (21) est prévue dans une deuxième paroi latérale (14) du cueilleur de maïs (1) et qu'à chaque unité de transmission (21) sont associés respectivement un arbre de sortie de cueilleur (49) et un arbre de sortie de hachage (36).

12. Machine agricole avec une unité de base mobile (2) et un cueilleur de maïs (1) selon l'une quelconque des revendications précédentes, dans laquelle l'arbre d'entraînement (26) de l'au moins une unité de transmission (21) est accouplé à un raccord de sortie de l'unité de base (2).
